# FASCICULE DE BREVET EUROPEEN

(11) **EP 3 003 741 B1**
(45) Date de publication et mention de la délivrance du brevet: **03.07.2019**
(21) Numéro de dépôt: 14731703.6
(22) Date de dépôt: 22.05.2014
(51) Int. Cl.: B60C 17/06, B60C 5/10, B60C 7/10, B60C 7/12

(54) **CHAMBRE DE PNEU**
REIFENKAMMER
TYRE CHAMBER

(30) Priorité: 28.05.2013 FR 1354779
(43) Date de publication de la demande: 13.04.2016
(73) Titulaire: Decathlon, 59650 Villeneuve D'ascq (FR)
(72) Inventeur: EL KHALKI, Jaouad, F-59260 Lezennes (FR); DELANNOY, Gabin, F-59830 Cysoing (FR); BRETAUDEAU, Eric, F-59110 La Madeleine (FR)
(74) Mandataire: Balesta, Pierre
(86) Numéro de dépôt international: PCT/FR2014/051199
(87) Numéro de publication internationale: WO 2014/191660

(56) Documents cités:
- DE-A1- 3 230 812
- DE-C- 202 933
- FR-A- 449 531

## Description

### Arrière-plan de l'invention

La présente invention a pour objet une chambre de pneu. Elle trouve en particulier une application pour être montée dans le dispositif de roulement d'une roue, pour équiper, par exemple et de manière non limitative, un véhicule tel qu'une bicyclette.

On connaît une roue comprenant une chambre à air montée dans le logement intérieur d'un pneumatique, une telle roue présentant un poids et une flexibilité permettant le déplacement du véhicule.

Cependant, le problème posé par ce type de roue est qu'il nécessite de nombreuses opérations de maintenance. En effet, du fait de la porosité du matériau constituant la chambre à air, l'utilisateur doit rétablir régulièrement sa pression intérieure. En outre, lors d'un choc de la roue avec un élément anguleux, tel que le bord d'un trottoir, ou au contact d'un objet pointu, tel qu'une pointe, la chambre à air peut être crevée, nécessitant la réparation de la chambre à air, voire le remplacement de la roue.

Une solution alternative à l'utilisation d'une chambre à air est proposée par le document GB 1912 21 272, qui décrit une roue comportant un premier et un second tubes ouverts, le premier tube étant disposé dans le second tube, les deux tubes étant fixés par des rivets à la jante de la roue. Cette solution, si elle résout les désagréments liés aux risques de crevaison, nécessite des opérations fastidieuses pour le montage des tubes sur la roue ; en outre, l'absence de pneumatique compromet le confort et la sécurité d'utilisation du véhicule sur lequel est montée la roue.

On connait également du document DE 32 30 812 une chambre de pneu formée par un tube annelé comportant une pluralité d'anneaux en créneau et d'anneaux en gouttière.

### Objet et résumé de l'invention

La présente invention a pour but de disposer d'une roue ne nécessitant pas la réalisation de nombreuses opérations de maintenance ou d'installation, la roue étant, en particulier, increvable, et permettant le déplacement d'un véhicule de manière confortable et sûre, et bénéficiant d'une restitution d'énergie permettant de limiter les efforts exercés par l'utilisateur pour mettre le véhicule en mouvement.

Ce but est atteint par le fait que l'invention porte sur une chambre de pneu torique, réalisée à partir d'un tube annelé cylindrique flexible courbé et refermé sur lui-même.

Ainsi, ce dispositif permet de remplacer la chambre à air utilisée habituellement, la pression intérieure de la chambre de pneu de la présente invention ne nécessitant pas d'être rétablie régulièrement, et la chambre de pneu ne présentant pas de risque de crevaison.

La forme cylindrique du tube lui permet de s'adapter à différents types de dispositifs de roulement, tels que des pneumatiques, sans requérir de modifications de la roue. Elle permet également de remplir convenablement la roue à équiper, en présentant, entre autres, des caractéristiques de confort et de restitution d'énergie similaires, voire supérieures, à celles d'une chambre à air.

Par tube, il est entendu un élément qui est formé, alternativement, d'une seule pièce ou par l'assemblage d'une pluralité de portions fixées les unes aux autres, par emmanchement, collage ou tout autre moyen.

Par tube annelé, on comprend, alternativement, un tube sur lequel des anneaux distincts et sensiblement parallèles les uns aux autres sont formés, ou un tube présentant un bourrelet de matière formé sur sa surface extérieure et s'enroulant de manière sensiblement hélicoïdale autour du tube.

Il est entendu que par cylindre, on comprend une surface définie par une droite passant par un point variable décrivant une courbe plane fermée ; on comprend donc que le tube cylindrique selon la présente invention ne présente pas nécessairement une section circulaire, et pourrait, par exemple et de manière non limitative, présenter une section elliptique.

Selon l'invention, le tube comprend une alternance d'anneaux en créneau et d'anneaux en gouttière.

La forme annelée du tube lui permet d'être courbé facilement, de manière à être refermé sur lui-même pour former une chambre de pneu de forme torique.

En outre, l'alternance d'anneaux en créneau et d'anneaux en gouttière permet de réduire l'impact des déformations subies par la chambre de pneu, lors du déplacement du véhicule sur lequel la roue équipée est montée. Elle permet également à la chambre de pneu de conserver une forme déployée et de résister à l'écrasement appliqué à la roue par le poids du véhicule, combiné éventuellement à celui de son utilisateur.

Selon l'invention, le tube présente un rayon et de manière avantageuse, chaque anneau en gouttière définit une gorge annulaire qui présente une profondeur radiale.

De préférence, mais non nécessairement, la profondeur radiale des anneaux en gouttière varie sur la circonférence du tube.

Par cette caractéristique, la chambre de pneu présente des caractéristiques de flexibilité adaptées aux sollicitations qu'elle est destinée à subir. En effet, la partie de la chambre de pneu disposée en regard de la surface de contact du dispositif de roulement n'est pas destinée à subir les mêmes sollicitations que celles subies par la partie de la chambre de pneu qui lui est diamétralement opposée, de même que celles subies par les parties latérales de la chambre de pneu.

Avantageusement, considéré dans un plan transversal, de préférence perpendiculaire, à l'axe du tube, les anneaux en gouttière présentent une forme ovale.

Par cette disposition, la section des anneaux en gouttière présente un axe de symétrie, voire deux.

De manière avantageuse, la profondeur radiale d'au moins l'un des anneaux en gouttière varie entre une profondeur radiale maximale et une profondeur radiale minimale, au moins l'une des profondeurs radiales maximale et minimale étant atteinte en au moins deux positions distinctes de la circonférence du tube.

Avantageusement, chacune des profondeurs radiales maximale et minimale est atteinte en au moins deux positions distinctes de la circonférence du tube.

De préférence, les deux positions distinctes de l'anneau en gouttière, où la profondeur radiale minimale est atteinte, sont diamétralement opposées.

Avantageusement, les deux positions distinctes de l'anneau en gouttière, où la profondeur radiale maximale est atteinte, ne sont pas diamétralement opposées.

Par ces différents comportements possibles de la variation de la profondeur radiale de l'anneau en gouttière sur la circonférence du tube, les propriétés de flexibilité, de restitution d'énergie, de résistance à l'écrasement, entre autres, peuvent être optimisées, en fonction du type de véhicule sur lequel la roue comportant la chambre de pneu est destinée à être montée, ainsi qu'en fonction de l'usage du véhicule, de l'environnement dans lequel il est destiné à évoluer, des caractéristiques de l'utilisateur, ...

De manière avantageuse, considérée dans un plan transversal, de préférence perpendiculaire, à l'axe du tube, l'épaisseur radiale d'au moins l'un des anneaux en créneau varie sur la circonférence du tube.

Par cette disposition, les propriétés de l'anneau en créneau, et en particulier sa flexibilité, varient sur la circonférence du tube, lui permettant de s'adapter aux différentes sollicitations qu'il est amené à subir.

De préférence, l'épaisseur radiale de l'anneau en créneau varie entre une épaisseur radiale maximale et une épaisseur radiale minimale, l'épaisseur radiale maximale étant atteinte en au moins l'une des positions de la circonférence du tube où la profondeur radiale minimale de l'anneau en gouttière est atteinte.

Avantageusement, chacune des épaisseurs radiales maximale et minimale est atteinte en au moins deux positions distinctes de la circonférence du tube.

De manière avantageuse, l'épaisseur radiale minimale de l'anneau en créneau est atteinte en au moins l'une des positions de la circonférence du tube où la profondeur radiale maximale de l'anneau en gouttière est atteinte.

Selon l'invention, l'épaisseur radiale des anneaux en gouttière est supérieure à l'épaisseur radiale des anneaux en créneau.

Par cette disposition, les propriétés de conservation de l'énergie et de confort ressenti par l'utilisateur sont encore améliorées : la raideur de la chambre de pneu est augmentée, de manière à limiter la perte de l'énergie libérée par l'utilisateur pour mettre en mouvement le véhicule dont au moins l'un des moyens de déplacement comporte une chambre de pneu selon la présente invention, sans toutefois compromettre le confort d'utilisation ressenti par l'utilisateur.

De préférence, les anneaux en gouttière et les anneaux en créneau sont contiguës.

Par cette disposition, à partir d'un tube droit cylindrique d'épaisseur radiale constante, les anneaux en gouttière et les anneaux en créneau peuvent être formés, leur épaisseur radiale et leur profondeur radiale respectives variant sur la circonférence du tube.

En d'autres termes, la matière constituant le tube cylindrique subit, lors de la formation des anneaux en créneau et en gouttière, des déformations d'importance différente sur la circonférence du tube, de manière à former, d'une part, les positions de la circonférence du tube où la profondeur radiale maximale de l'anneau en gouttière et l'épaisseur radiale minimale de l'anneau en créneau sont atteintes simultanément, et, d'autre part, les positions de la circonférence du tube où la profondeur radiale minimale de l'anneau en gouttière et l'épaisseur radiale maximale de l'anneau en créneau sont atteintes simultanément.

Avantageusement, considérée dans un plan perpendiculaire à l'axe du tube, l'épaisseur radiale d'au moins l'un des anneaux en gouttière varie sur la circonférence du tube.

De manière avantageuse, mais non nécessairement, l'épaisseur radiale de l'anneau en gouttière varie, sur la circonférence du tube, de manière similaire à l'épaisseur radiale de l'un des anneaux en créneau entourant l'anneau en gouttière.

En d'autres termes, les épaisseurs radiales minimale et maximale de l'anneau en gouttière sont atteintes en les mêmes positions de la circonférence du tube que celles en lesquelles les épaisseurs radiales respectivement minimale et maximale de l'un des anneaux en créneau disposé de manière contigüe à l'anneau en gouttière sont atteintes.

Ces différentes dispositions permettent de simplifier la fabrication du tube annelé, sans compromettre l'adéquation des propriétés des anneaux en gouttière et des anneaux en créneau avec les sollicitations subies par le tube.

De préférence, considérée dans un plan contenant l'axe du tube, la périphérie d'au moins l'un des anneaux en créneau est sensiblement plate.

Par cette disposition, la périphérie des anneaux en créneau vient en contact contre la surface intérieure du dispositif de roulement dans le logement intérieur duquel la chambre de pneu est insérée.

Avantageusement, considérée dans un plan contenant l'axe du tube, la section d'au moins l'un des anneaux en gouttière est bombée.

Par cette disposition, la flexibilité du tube annelé est assurée, les anneaux en gouttière disposés de part et d'autre d'un anneau en gouttière pouvant alternativement se rapprocher ou s'éloigner l'un de l'autre, en fonction des sollicitations subies par la chambre de pneu.

De manière avantageuse, considérée dans un plan contenant l'axe du tube, la longueur axiale de la périphérie d'au moins l'un des anneaux en créneau est strictement supérieure à la longueur axiale de la gorge d'au moins l'un des anneaux en gouttière.

Par cette disposition, le contact de la périphérie des anneaux en créneau avec la surface intérieure du dispositif de roulement, dans le logement intérieur duquel la chambre de pneu est insérée, est assurée, quel que soit le rayon de courbure de la chambre de pneu.

De préférence, le tube est formé en élastomère thermoplastique (TPE).

Avantageusement, l'élastomère thermoplastique est un copolyester thermoplastique ou un copolymère bloc éther-ester.

L'utilisation de ce matériau permet de concilier simultanément les caractéristiques de flexibilité et de résistance du tube recherchées, aux contraintes de complexité et de coût de fabrication.

De manière avantageuse, la chambre de pneu est une chambre non gonflable.

Par cette disposition, l'utilisateur ne doit plus rétablir régulièrement la pression interne de la chambre de pneu, ni réparer les éventuelles crevaisons subies ; la chambre de pneu présente ainsi une durabilité supérieure à celle des chambres à air utilisées traditionnellement pour être disposées dans le pneumatique d'une roue. On comprend donc que la chambre de pneu de la présente invention présente également des intérêts écologiques et économiques.

De préférence, l'invention porte également sur une roue configurée pour être montée sur un véhicule, tel qu'une bicyclette, comportant :
- un dispositif de roulement comprenant une surface de contact configurée pour venir en contact avec le sol lors du déplacement du véhicule, et définissant un logement intérieur ;
- une chambre de pneu selon la présente invention, la chambre de pneu étant disposée dans le logement intérieur du dispositif de roulement.

Avantageusement, l'une des positions de la circonférence de l'anneau en gouttière, où la profondeur radiale minimale est atteinte, est disposée en regard de la surface de contact du dispositif de roulement.

De manière avantageuse, l'une des positions de la circonférence de l'anneau en créneau, où l'épaisseur radiale maximale est atteinte, est disposée en regard de la surface de contact du dispositif de roulement.

Par ces dispositions, en particulier, le confort d'utilisation du véhicule, de même que la restitution d'énergie du véhicule, sont améliorés.

De préférence, le dispositif de roulement comporte une première et une seconde bordures latérales s'étendant à partir de la surface de contact, une échancrure étant formée dans l'une des première et seconde bordures latérales du dispositif de roulement.

De manière avantageuse, une première et une seconde échancrures sont formées respectivement dans les première et seconde bordures latérales, les première et seconde échancrures étant disposées en regard l'une de l'autre.

La présence de l'échancrure permet de rendre visible, depuis l'extérieur de la roue, la chambre de pneu disposée dans le logement intérieur du dispositif de roulement. En plus des avantages liés à la régulation de la température du logement intérieur du dispositif de roulement, l'échancrure présente également un intérêt esthétique, ainsi qu'une possibilité de contrôler que la chambre de pneu a effectivement été montée dans le dispositif de roulement de la roue.

En outre, l'échancrure étant formée dans la bordure latérale, elle ne compromet pas la solidité du dispositif de roulement, ni sa résistance aux sollicitations subies, ni l'adhérence de la roue au sol.

Avantageusement, la roue comporte en outre un manchon de protection, agencé autour du tube de la chambre de pneu, et disposé en regard de l'échancrure.

Par cette disposition, la portion de la chambre de pneu visible au travers de l'échancrure ne peut pas être altérée depuis l'extérieur de la roue.

De manière avantageuse, le tube de la chambre de pneu comporte une première et une seconde extrémités longitudinales et le manchon de protection comporte une première extrémité fermée, le manchon de protection étant disposé à la première extrémité longitudinale du tube, la première extrémité fermée étant disposée contre la seconde extrémité longitudinale.

Le manchon de protection peut ainsi être aisément et rapidement monté sur la chambre de pneu, sans compromettre la coopération des première et seconde extrémités longitudinales, une telle coopération étant nécessaire au remplissage du dispositif de roulement par la chambre de pneu.

De préférence, le manchon de protection est formé dans un matériau transparent.

Un tel matériau assure la visibilité du tube de la chambre de pneu depuis l'extérieur de la roue.

### Brève description des dessins

D'autres caractéristiques et avantages de l'invention apparaîtront plus clairement et de manière complète à la lecture de la description ci-après de deux modes de réalisation préférés, donnés à titre d'exemples non limitatifs et en référence aux dessins annexés suivants sur lesquels :
- la figure **1A** représente schématiquement une vue partiellement en coupe d'un exemple de roue selon la présente invention ;
- les figures **1B**, **1C** et **1D** représentent schématiquement les première et seconde extrémités de modes de réalisation alternatifs de la chambre de pneu selon la présente invention ;
- les figures **2A** et **2B** représentent schématiquement des vues en coupe, respectivement selon un plan transversal à l'axe du tube et selon un plan contenant l'axe du tube, d'un premier mode de réalisation de la chambre de pneu non couvert par la présente invention ;
- la figure **2C** représente schématiquement une vue en coupe, selon un plan contenant l'axe du tube, d'un deuxième mode de réalisation de la chambre de pneu selon la présente invention ;
- les figures **3A**, **3B** et **3C** représentent schématiquement des vues en coupe, respectivement selon un plan transversal à l'axe du tube et selon un premier et un second plans contenant l'axe du tube, d'un troisième mode de réalisation de la chambre de pneu selon la présente invention ;
- la figure **4** représente schématiquement un exemple de véhicule sur lequel est montée la roue selon la présente invention ; et
- la figure **5** représente schématiquement un exemple de manchon de protection monté sur une extrémité du tube de la présente invention.

### Description détaillée de l'invention

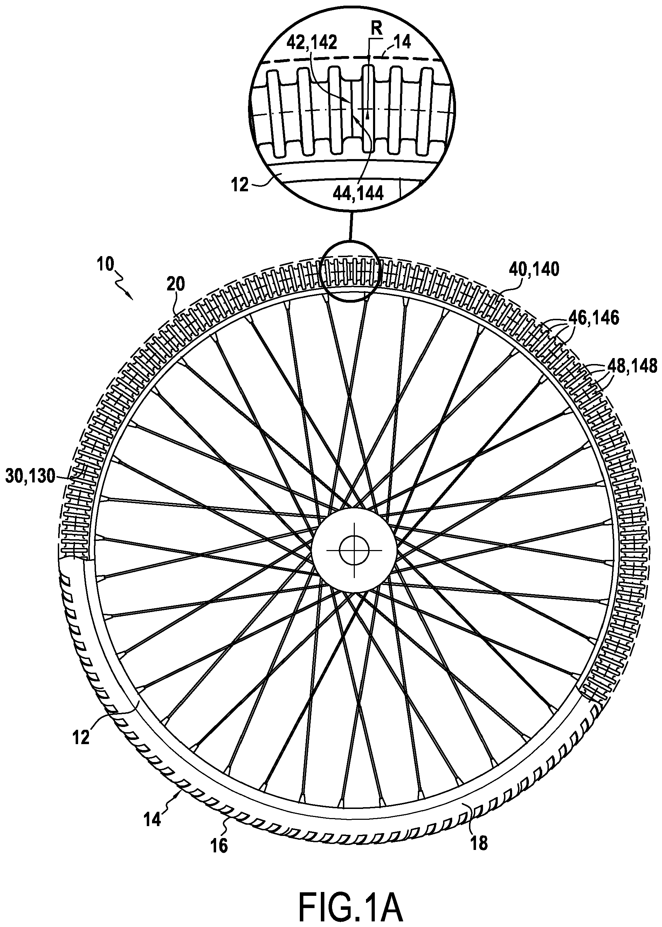

Dans l'exemple représenté à la figure **1A**, la roue **10** selon la présente invention comporte, de manière traditionnelle, une jante **12** et un dispositif de roulement **14**, tel que, par exemple, un pneumatique.

Le dispositif de roulement **14** présente une surface de contact **16** sur laquelle peuvent être formés, par exemple et de manière non limitative, des reliefs favorisant l'adhérence de la roue avec le sol ; en outre, le dispositif de roulement **14** comporte une première **18** et une seconde bordures latérales qui s'étendent toutes deux depuis la surface de contact **16** vers la jante **12.**

Le dispositif de roulement **14** est monté sur la jante **12** de manière que la surface de contact **16** et les première **18** et seconde bordures latérales définissent un logement intérieur **20** dans lequel est disposée une chambre de pneu **30**, **130.**

Tel que représenté en particulier sur le détail de la figure **1A** sur lequel le dispositif de roulement **14** est représenté en traits pointillés, la chambre de pneu **30**, **130** est disposée entre la face intérieure de la surface de contact **16** et la périphérie de la jante **12.**

Par face intérieure de la surface de contact **16**, on entend la face opposée à celle destinée à venir en contact avec le sol.

La chambre de pneu **30**, **130** présente une forme torique et est, dans cet exemple, réalisée à partir d'un tube **40**, **140** annelé, cylindrique qui présente un rayon **R**, et qui est courbé et refermé sur lui-même.

Tel que représenté sur la figure **1A**, le tube **40**, **140** comporte une première extrémité **42**, **142** et une seconde extrémité **44**, **144** opposée à la première extrémité ; le tube **40**, **140**, initialement rectiligne, est courbé et refermé sur lui-même de manière à former un tore ouvert, de sorte que les première et seconde extrémités **42**, **44**, **142**, **144** sont amenées en contact l'une contre l'autre.

Il apparaît ainsi que lorsque le tube **40**, **140** est refermé sur lui-même, les première et seconde extrémités **42**, **44**, **142**, **144** sont en contact du type plan contre plan, l'une contre l'autre. Un tel contact des extrémités l'une contre l'autre permet ainsi de refermer le tube sur lui-même, le tube étant maintenu entre la face intérieure de la surface de contact du dispositif de roulement **14** et la périphérie de la jante **12.**

On comprend donc que le tube **40**, **140** peut alternativement prendre un état rectiligne, dans lequel il présente un axe longitudinal **A**, représenté sur les figures suivantes, et un état courbé, dans lequel il forme un tore ouvert.

Le tube **40**, **140** est constitué d'une alternance d'anneaux en créneau **46**, **146** et d'anneaux en gouttière **48**, **148**.

Tel que cela apparaît sur les différentes figures, les portions du tube **40**, **140** liant deux anneaux successifs sont arrondies, de manière à ne pas constituer des arêtes vives qui pourraient compromettre l'utilisation du tube **40**, **140**.

Tel que représenté sur la figure **1A**, les première et seconde extrémités **42**, **44**, **142**, **144** sont constituées par des portions d'anneaux en gouttière **48**, **148.**

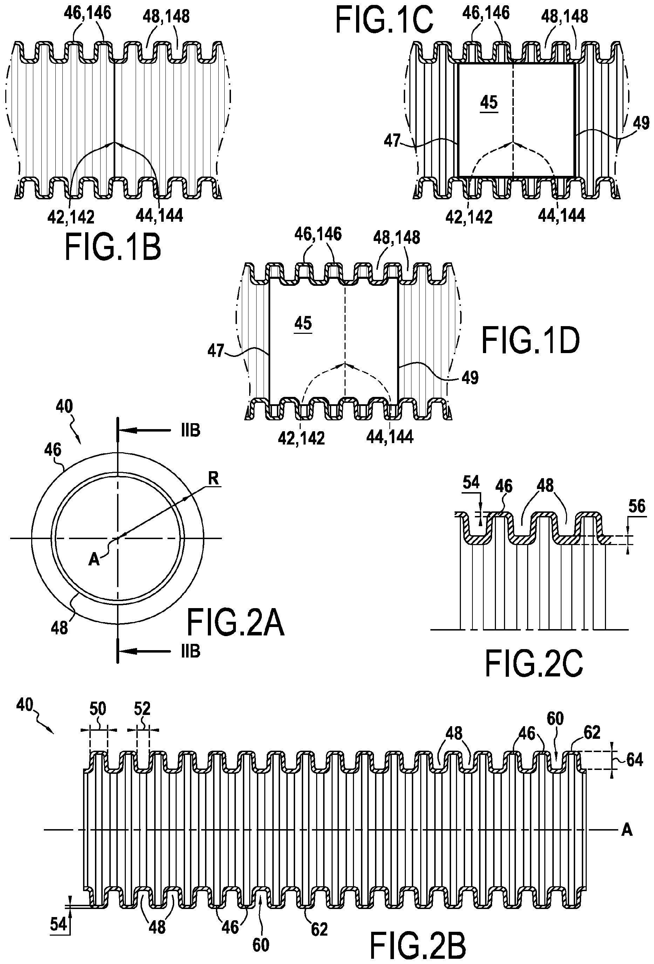

On pourrait bien évidemment concevoir, et sans sortir du cadre de la présente invention, un tube **40**, **140** dont les première et seconde extrémités **42**, **44**, **142**, **144** seraient constituées respectivement, et tel que représenté sur la figure **1B**, par une portion d'anneau en créneau **46**, **146** et par une portion d'anneau en gouttière **48**, **148.** Par cette disposition, le contact entre les deux extrémités du tube est encore amélioré, l'extrémité constituée par une portion d'anneau en gouttière **48**, **148** venant en appui contre la surface définie par la portion d'anneau en créneau **46**, **146** qui constitue l'autre extrémité.

Alternativement, et sans sortir du cadre de la présente invention, les première et seconde extrémités **42**, **44**, **142**, **144** peuvent être constituées de de deux portions d'anneau d'anneaux en créneau **46**, **146**, de manière à encore améliorer le contact entre les deux extrémités.

Par ailleurs, et tel que représenté sur la figure **1C**, on pourrait également concevoir la présence d'un élément de fermeture **45**, disposé dans le volume intérieur du tube **40**, **140** et configuré pour encore améliorer le contact entre les première et seconde extrémités **42**, **44**, **142**, **144** lorsque le tube **40**, **140** est refermé sur lui-même. Par exemple et de manière non limitative, l'élément de fermeture **45** comporte un segment de tube, de section égale, voire légèrement supérieure, à la section intérieure du tube **40**, **140**, l'élément de fermeture **45** comportant en outre une première **47** et une seconde **49** extrémités, emmanchées, ou fixées par tout autre moyen, respectivement dans les première et seconde extrémités **42**, **44**, **142**, **144** du tube **40**, **140.** L'élément de fermeture **45** peut ainsi être engagé en force dans le tube **40**, **140** ; il peut en outre éventuellement être fixé, par exemple par collage, dans le volume intérieur du tube **40**, **140.** L'élément de fermeture **45** est ainsi configuré pour encore améliorer le contact des extrémités du tube **40**, **140** l'une contre l'autre, lorsque le tube est refermé sur lui-même.

La figure **1D** représente un mode de réalisation alternatif de l'élément de fermeture **45**, dont la section est conformée de manière à épouser le profil intérieur du tube **40**, **140** ; ainsi, tel que cela apparaît sur la figure, l'élément de fermeture **45** peut comporter des portions faisant saillie configurées pour être logées dans le volume intérieur des anneaux en créneau **46**, **146**, de manière à encore améliorer le montage de l'élément de fermeture **45** et, par suite, la solidarisation des première et seconde extrémités **42**, **44**, **142**, **144** du tube **40**, **140.**

L'alternance des anneaux en créneau et en gouttière assure la flexibilité du tube **40**, **140**, de manière à lui permettre, lorsqu'il se trouve dans l'état rectiligne, d'être recourbé pour passer dans l'état courbé pour être fermé sur lui-même, afin de former la chambre de pneu **30**, **130** de forme torique logée dans le logement intérieur **20** de la roue **10.**

On comprend que, lorsque le tube **40**, **140** se trouve dans l'état rectiligne, les extrémités longitudinales du tube **40**, **140** sont constituées par les première et seconde extrémités **42**, **44**, **142**, **144** ; en outre, la longueur du tube **40**, **140** est égale, voire légèrement supérieure, à la circonférence de la jante **12** de la roue **10** de manière à assurer le contact entre les première et seconde extrémités **42**, **44**, **142**, **144.**

Par exemple et de manière non limitative, le tube **40**, **140** est formé en élastomère thermoplastique (TPE), l'élastomère thermoplastique pouvant être un copolyester thermoplastique ou un copolymère bloc éther-ester.

Les figures **2A** et **2B** représentent un premier mode de réalisation du tube **40** non couvert par l'invention, le tube **40** étant, sur ces différentes figures, dans son état rectiligne.

Tel que cela apparaît en particulier sur la figure **2A**, qui représente une vue en coupe selon un plan transversal, de préférence perpendiculaire, à l'axe **A** du tube **40**, chaque anneau en créneau **46** et chaque anneau en gouttière **48** présentent une forme sensiblement circulaire.

La figure **2B** représente une vue en coupe du tube **40** réalisée selon un plan contenant l'axe **A** du tube **40**, le tube **40** se trouvant dans l'état rectiligne

Les anneaux en gouttière **48** présentent une gorge **60** annulaire, chaque gorge **60** formant une dépression délimitée par deux anneaux en créneau **46** consécutifs.

Les anneaux en créneau **46** présentent une périphérie **62**, disposée, par exemple et de manière non limitative, parallèlement au fond des gorges **60.**

Par exemple et de manière non limitative, la périphérie **62** des anneaux en créneau **46** est sensiblement plate, de même que le fond des gorges **60** des anneaux en gouttière **48**, qui définissent une section des anneaux en gouttière **48.** On pourrait néanmoins concevoir, et sans sortir du cadre de la présente invention, un tube **40** constitué d'anneaux en créneau **46** et d'anneaux en gouttière **48** dont les périphéries et les sections respectives seraient bombées.

Les anneaux en créneau **46** et les anneaux en gouttière **48** définissent chacun une longueur axiale **50**, **52.** La longueur axiale **50** des anneaux en créneau **46** se comprend comme étant la longueur axiale de la périphérie **62** des anneaux en créneau **46**, alors que la longueur axiale **52** des anneaux en gouttière **48** se comprend comme étant la longueur axiale de l'espace de la gorge **60** défini entre deux anneaux en créneau **46** successifs, les différentes longueurs axiales étant considérées lorsque le tube **40** se trouve dans l'état rectiligne.

Par exemple et de manière non limitative, dans le premier mode de réalisation représenté sur les figures **2A** et **2B**, la longueur axiale **50** de la périphérie **62** des anneaux en créneau **46** est strictement supérieure à la longueur axiale **52** de la gorge **60** des anneaux en gouttière **48.**

Par ailleurs, chaque gorge **60** annulaire des anneaux en gouttière **48** présente une profondeur radiale **64** ; par profondeur radiale **64** de la gorge **60** des anneaux en gouttière **48**, on entend la distance séparant le fond de la gorge **60** de la périphérie **62** des anneaux en créneau **46** entourant l'anneau en gouttière **48** correspondant.

Dans le premier mode de réalisation du tube **40**, la profondeur radiale **64** des gorges annulaires **60** est constante sur la circonférence du tube **40.**

Les anneaux en créneau **46** et les anneaux en gouttière **48** définissent également une épaisseur radiale **54**, **56** qui, dans ce premier mode de réalisation et de manière non limitative, est constante sur la circonférence du tube **40.**

La figure **2C** représente un deuxième mode de réalisation du tube **40** selon la présente invention.

Ce deuxième mode de réalisation se caractérise par le fait que les anneaux en gouttière **48** présentent une épaisseur radiale **56** supérieure à l'épaisseur radiale **54** des anneaux en créneau **46.**

Par exemple et de manière non limitative, les épaisseurs radiales **54**, **56** sont constantes sur la circonférence du tube **40.**

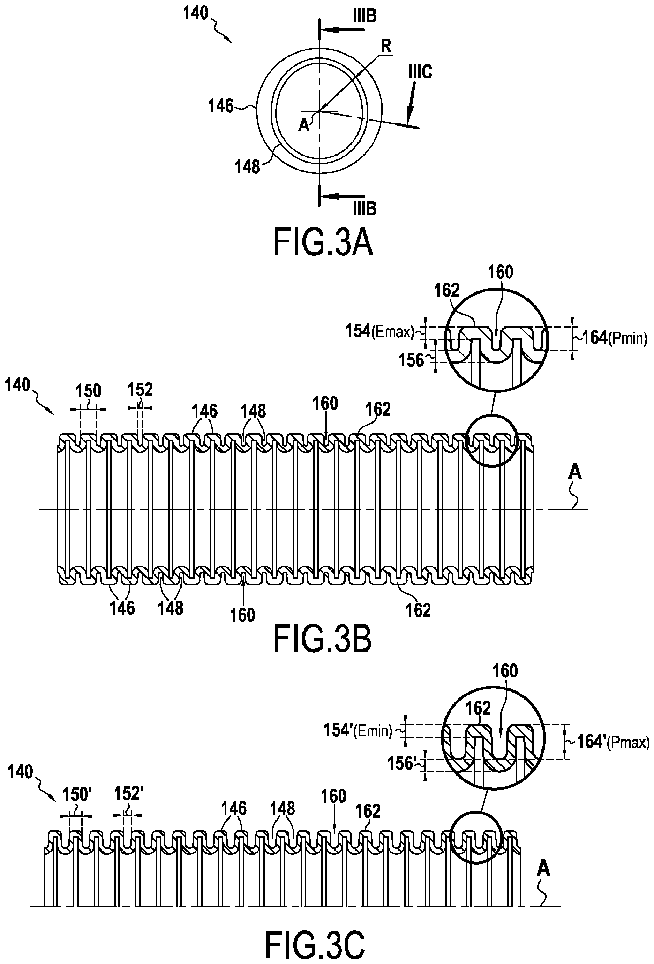

Les figures **3A**, **3B** et **3C** représentent un troisième mode de réalisation du tube **140** selon la présente invention, le tube **140** se trouvant, sur ces différentes figures, dans l'état rectiligne.

La figure **3A** représente une vue en coupe du tube **140** réalisée selon un plan transversal, de préférence perpendiculaire, à l'axe **A** du tube **140.**

De manière similaire aux premier et deuxième modes de réalisation décrits précédemment en référence aux figures **2A**, **2B** et **2C**, le tube **140** est constitué d'une alternance d'anneaux en créneau **146** et d'anneaux en gouttière **148**, les anneaux en créneau **146** et les anneaux en gouttière **148** présentant respectivement une périphérie **162** et une gorge **160** annulaire.

Les anneaux en créneau **146** présentent en outre une forme sensiblement circulaire alors que, tel que cela apparaîtra plus clairement à la description des figures **3B** et **3C**, les anneaux en gouttière **148** présentent, par exemple et de manière non limitative, une forme ovale.

En outre, la périphérie **162** des anneaux en créneau **146** est sensiblement plate, alors que la section des anneaux en gouttière **148**, constituée par le fond des gorges **160**, est bombée.

Les figures **3B** et **3C** représentent schématiquement une vue en coupe du tube **140**, réalisée respectivement selon un premier et un second plans, les premier et second plans contenant tous deux l'axe **A** du tube **140.**

Tel que représenté sur la vue en coupe selon le premier plan de la figure **3B**, et de manière similaire aux premier et deuxième modes de réalisation décrits précédemment, les anneaux en créneau **146** et les anneaux en gouttière **148** définissent chacun une première longueur axiale **150**, **152.**

Les anneaux en gouttière **148** définissent également une première profondeur radiale **164.**

En outre, les anneaux en créneau **146** et les anneaux en gouttière **148** définissent chacun une première épaisseur radiale **154**, **156**, les premières épaisseurs radiales **154**, **156** étant définies comme l'épaisseur radiale de la matière du tube **140** formant respectivement les anneaux en créneau **146** et les anneaux en gouttière **148.**

La section du tube **140**, réalisée selon le premier plan, présente une symétrie selon l'axe **A.**

Par ailleurs, la portion du tube **140** dans son état rectiligne, représentée sur la figure **3C**, comporte une alternance d'anneaux en créneau **146** et d'anneaux en gouttière **148** qui définissent chacun des secondes longueurs axiales **150**', **152**' et des secondes épaisseurs radiales **154**', **156**'. En outre, les anneaux en gouttière **148** définissent une seconde profondeur radiale **164**'.

Tel que cela apparaît sur les différentes figures représentant le second mode de réalisation du tube **140** dans son état rectiligne, la profondeur radiale **164**, **164**' des anneaux en gouttière **148** varie sur la circonférence du tube **140** entre une profondeur radiale minimale **Pmin**, constituée par la première profondeur radiale **164**, et une profondeur radiale maximale **Pmax**, constituée par la seconde profondeur radiale **164**'. Les profondeurs radiales maximales **Pmax** et minimales **Pmin** des anneaux en gouttière **148** sont toutes deux atteintes en deux positions distinctes de la circonférence du tube **140.**

Par exemple et de manière non limitative, dans le troisième mode de réalisation du tube **140**, les positions distinctes des anneaux en gouttière **148** où la profondeur radiale minimale **Pmin** est atteinte sont diamétralement opposées, alors que les positions distinctes des anneaux en gouttière **148** où la profondeur radiale maximale **Pmax** est atteinte ne le sont pas.

On pourrait bien évidemment concevoir un tube **140** dont les deux positions distinctes où la profondeur radiale minimale **Pmin** est atteinte ne seraient pas diamétralement opposées, alors que les deux positions distinctes où la profondeur radiale maximale **Pmax** est atteinte le seraient. On pourrait également concevoir un tube **140** dont les profondeurs radiales maximale **Pmax** et minimale **Pmin** seraient atteintes en une seule position, voire en plus de deux positions distinctes de la circonférence du tube **140.**

En outre, tel que représenté sur les différentes figures du second mode de réalisation, l'épaisseur radiale **154**, **154**' des anneaux en créneau **146** varie sur la circonférence du tube **140** entre une épaisseur radiale minimale **Emin**, constituée par la seconde épaisseur radiale **154**', et une épaisseur radiale maximale **Emax**, constituée par la première épaisseur radiale **154**.

Ainsi, dans le troisième mode de réalisation du tube **140** et de manière non limitative, l'épaisseur radiale minimale **Emin** des anneaux en créneau **146** est atteinte en la position de la circonférence du tube où la profondeur radiale maximale **Pmax** des anneaux en gouttière **148** est atteinte ; inversement, l'épaisseur radiale maximale **Emax** des anneaux en créneau **146** est atteinte en la position de la circonférence du tube **140** où la profondeur radiale minimale **Pmin** de l'anneau en gouttière **148** est atteinte.

Dans ce troisième mode de réalisation, le tube **140** comporte donc deux positions distinctes, diamétralement opposées, où l'épaisseur radiale maximale **Emax** des anneaux en créneau **146** est atteinte, et deux positions distinctes, non diamétralement opposées, où l'épaisseur radiale minimale **Emin** des anneaux en créneau **146** est atteinte.

En outre, dans cet exemple et de manière non limitative, l'épaisseur radiale **156**, **156**' des anneaux en gouttière **148** peut également varier sur la circonférence du tube **140.**

Par ailleurs et de manière similaire aux premier et deuxième modes de réalisation décrits précédemment, les première et seconde longueurs axiales **150**, **150**' des anneaux en créneau **146** peuvent être, par exemple et de manière non limitative, supérieures respectivement aux première et seconde **152**, **152**' longueurs axiales des anneaux en gouttière **148**.

On peut également concevoir un tube **140** dont les première et seconde longueurs axiales **150**, **150**' des anneaux en créneau **146** sont égales, et dont les première et seconde **152**, **152**' longueurs axiales des anneaux en gouttière **148** sont aussi égales.

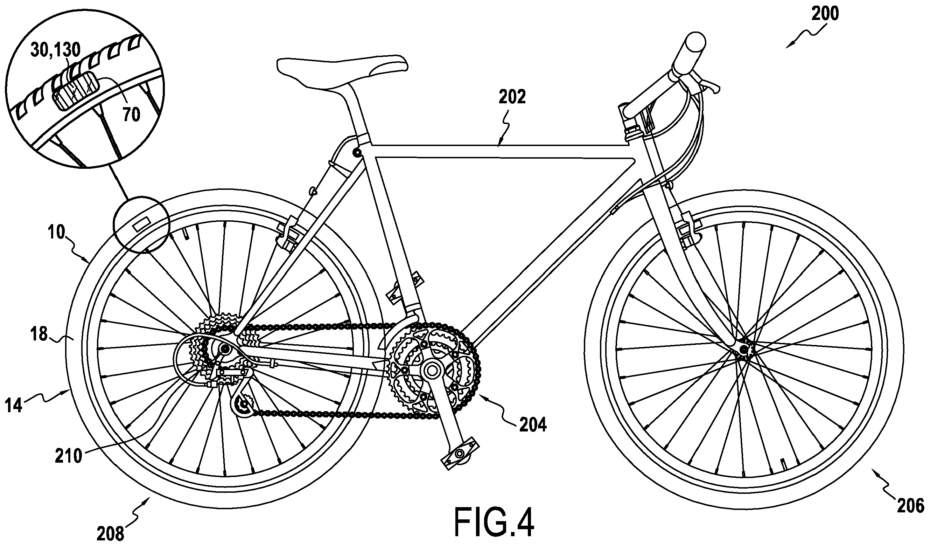

La figure **4** représente un véhicule **200**, en l'occurrence une bicyclette, comportant un cadre **202**, un système de pédalier **204**, une pièce de déplacement avant **206** et une pièce de déplacement arrière **208,** la pièce de déplacement arrière **208** comportant une roue **10** selon la présente invention.

La pièce de déplacement arrière **208** comporte en outre un moyeu **210** auquel est fixée la jante **12** de la roue **10.** L'axe du tore définit par la chambre de pneu **30**, **130** réalisée à partir du tube **40**, **140**, qui se trouve alors dans son état courbé, est confondu avec l'axe du moyeu **210.**

Tel que représenté sur la figure **4**, la roue **10** comporte une échancrure **70** formée dans la première bordure latérale **18** du dispositif de roulement **14** ; par exemple et de manière non limitative, l'échancrure **70** prend la forme d'une fenêtre sensiblement rectangulaire.

L'échancrure **70** ainsi formée permet de rendre visible la chambre de pneu **30**, **130** disposée dans le logement intérieur de la roue **10.**

On peut également imaginer, sans sortir du cadre de la présente invention, la mise en valeur de la zone de la première bordure latérale **18** dans laquelle est formée l'échancrure **70**, par la coloration de ladite zone.

La chambre de pneu **30**, **130** ainsi disposée entre la surface de contact **16** du dispositif de roulement **14** de la roue **10** et la jante **12**, constitue une structure flexible grâce à laquelle la pièce de déplacement arrière **208** peut être mise en rotation par le système de pédalier **204**, afin de permettre le déplacement du véhicule **200.**

La chambre de pneu **30**, **130** vient ainsi en substitution des chambres à air utilisées de manière traditionnelle pour être montées dans les pièces de déplacement de véhicules.

Dans le cas où la roue **10** comporte le tube **140** du troisième mode de réalisation décrit précédemment, il est particulièrement avantageux de disposer l'une des positions de la circonférence du tube **140** où la profondeur radiale minimale **Pmin** est atteinte en regard de la surface de contact **16** du dispositif de roulement **14**, de manière à bénéficier de propriétés de flexibilité optimales.

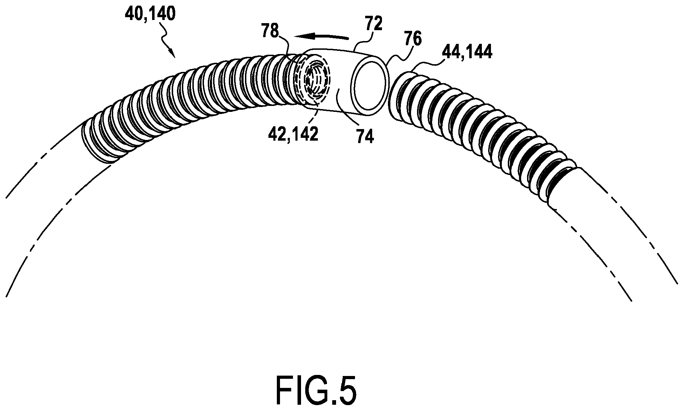

La figure **5** représente le tube **40**, **140**, dans un état intermédiaire entre son état rectiligne et son état courbé, avant qu'il ne soit disposé dans le logement intérieur du dispositif de roulement **14** de la roue **10**, un manchon de protection **72** étant monté sur la première extrémité **42**, **142** du tube **40**, **140.**

Le manchon de protection **72** présente un corps cylindrique définissant une cavité interne **74** et comportant une première **76** et une seconde **78** extrémités opposées l'une à l'autre, la première extrémité **76** étant, par exemple et de manière non limitative, fermée.

Les dimensions de la cavité interne **74** du manchon de protection **72** sont égales, voire légèrement supérieures, aux dimensions du tube **40**, **140** de manière que le manchon **72** peut être engagé sur la première extrémité **42**, **142**, en étant coulissé le long du tube **40**, **140**, tel que représenté sur la figure **5**, jusqu'à ce que la première extrémité **76** du manchon de protection **72** vienne en butée contre la première extrémité **42**, **142** du tube **40**, **140.**

Par exemple et de manière non limitative, le manchon de protection **72** peut être formé dans un matériau transparent, de manière à protéger la première extrémité **42**, **142** du tube **40**, **140** disposée en regard de l'échancrure **70**, tout en la laissant visible.

L'ensemble de la description ci-dessus est donné à titre d'exemple et n'est donc pas limitatif de l'invention.

En particulier et tel qu'évoqué précédemment à la description du troisième mode de réalisation du tube **140**, les différents paramètres de profondeur radiale, de longueur axiale et d'épaisseur radiale des anneaux en gouttière et des anneaux en créneau peuvent varier sur la circonférence du tube **140**, selon différents comportements possibles.

En outre, on pourrait également concevoir, et sans sortir du cadre de la présente invention, un tube constitué d'une alternance d'anneaux en créneau et d'anneaux en gouttière dont les différents anneaux présenteraient des dimensions différentes, d'un anneau à un autre.

Tel qu'évoqué précédemment, la flexibilité du tube est permise par l'alternance des anneaux en gouttière et des anneaux en créneau, de manière que le tube peut être courbé de manière à être disposé dans le logement intérieur de dispositifs de roulement de différentes dimensions, le tube pouvant ainsi être utilisé pour équiper des roues de différentes tailles en fonction de sa longueur axiale.

Par ailleurs, le tube de la présente invention, bien qu'il équipe, dans notre exemple, une bicyclette, peut également être utilisé pour tout autre type de véhicule, tel qu'un véhicule motorisé, une trottinette ou autre.

## Revendications

1. Chambre de pneu (30, 130) torique ayant la forme d'un tube (40, 140) annelé flexible courbé et refermé sur lui-même, le tube comprenant une alternance d'anneaux en créneau (46, 146) et d'anneaux en gouttière (48, 148), le tube présentant un rayon (R), **caractérisée en ce que**, considérée dans un plan perpendiculaire à l'axe (A) du tube, l'épaisseur radiale (54, 154') des anneaux en créneau (46, 146) est inférieure à l'épaisseur radiale (56, 156') des anneaux en gouttière (48, 148).

2. Chambre de pneu (130) selon la revendication **1**, **caractérisée en ce que** le tube (140) présente un rayon (R), et **en ce que** chaque anneau en gouttière (148) définit une gorge (160) annulaire qui présente une profondeur radiale (164, 164'), la profondeur radiale des anneaux en gouttière variant sur la circonférence du tube.

3. Chambre de pneu (130) selon la revendication **2**, **caractérisée en ce que**, considérés dans un plan transversal à l'axe (A) du tube (140), les anneaux en gouttière présentent une forme ovale.

4. Chambre de pneu (130) selon la revendication **2** ou **3**, **caractérisée en ce que** la profondeur radiale (164, 64') d'au moins l'un des anneaux en gouttière varie entre une profondeur radiale maximale (Pmax) et une profondeur radiale minimale (Pmin), au moins l'une des profondeurs radiales maximale et minimale étant atteinte en au moins deux positions distinctes de la circonférence du tube.

5. Chambre de pneu (130) selon la revendication **4**, **caractérisée en ce que** les deux positions distinctes de l'anneau en gouttière, où la profondeur radiale minimale (Pmin) est atteinte, sont diamétralement opposées.

6. Chambre de pneu (130) selon la revendication **4** ou **5**, **caractérisée en ce que** les deux positions distinctes de l'anneau en gouttière, où la profondeur radiale maximale (Pmax) est atteinte, ne sont pas diamétralement opposées.

7. Chambre de pneu (130) selon l'une quelconque des revendications **1 à 6**, **caractérisée en ce que** l'épaisseur radiale (154, 154') d'au moins l'un des anneaux en créneau (146) varie sur la circonférence du tube.

8. Chambre de pneu (130) selon l'une quelconque des revendications **4 à 6**, **caractérisée en ce que** l'épaisseur radiale (154, 154') de l'anneau en créneau varie entre une épaisseur radiale maximale (Emax) et une épaisseur radiale minimale (Emin), l'épaisseur radiale maximale (Emax) étant atteinte en au moins l'une des positions de la circonférence du tube où la profondeur radiale minimale (Pmin) de l'anneau en gouttière est atteinte.

9. Chambre de pneu (130) selon la revendication **8**, **caractérisée en ce que** l'épaisseur radiale minimale (Emin) de l'anneau en créneau est atteinte en au moins l'une des positions de la circonférence du tube où la profondeur radiale maximale (Pmax) de l'anneau en gouttière est atteinte.

10. Chambre de pneu (130) selon l'une quelconque des revendications **1 à 9**, **caractérisée en ce que** le tube présente un rayon (R), et **en ce que**, considérée dans un plan perpendiculaire à l'axe (A) du tube, l'épaisseur radiale (156, 156') d'au moins l'un des anneaux en gouttière (148) varie sur la circonférence du tube.

11. Chambre de pneu (30, 130) selon l'une quelconque des revendications **1 à 10**, **caractérisée en ce que**, considérée dans un plan contenant l'axe du tube, la périphérie (62, 162) d'au moins l'un des anneaux en créneau est sensiblement plate.

12. Chambre de pneu (130) selon l'une quelconque des revendications **1 à 11**, **caractérisée en ce que**, considérée dans un plan contenant l'axe du tube, la section d'au moins l'un des anneaux en gouttière est bombée.

13. Chambre de pneu (30, 130) selon l'une quelconque des revendications **2 à 12**, **caractérisée en ce que**, considérée dans un plan contenant l'axe du tube, la longueur axiale (50, 150, 150') de la périphérie d'au moins l'un des anneaux en créneau est strictement supérieure à la longueur axiale (52, 152, 152') de la gorge d'au moins l'un des anneaux en gouttière.

14. Chambre de pneu (30, 130) selon l'une quelconque des revendications **1 à 13**, **caractérisée en ce que** le tube (40, 140) est formé en élastomère thermoplastique (TPE).

15. Chambre de pneu (30, 130) selon l'une quelconque des revendications **1 à 14**, **caractérisée en ce qu'**il s'agit d'une chambre non gonflable.

16. Chambre de pneu (30, 130) selon l'une quelconque des revendications **1 à 15**, **caractérisée en ce qu'**elle est formée à partir d'un tube (40, 140) annelé flexible courbé et refermé sur lui-même.

17. Roue (10) configurée pour être montée sur un véhicule (200), tel qu'une bicyclette, **caractérisée en ce qu'**elle comporte :
- un dispositif de roulement (14) comprenant une surface de contact (16) configurée pour venir en contact avec le sol lors du déplacement du véhicule, et définissant un logement intérieur (20) ;
- une chambre de pneu (30, 130) selon l'une quelconque des revendications **1 à 16**, la chambre de pneu étant disposée dans le logement intérieur du dispositif de roulement.

18. Roue (10) selon la revendication **17**, comportant une chambre de pneu (130) selon la revendication **4**, **caractérisée en ce que** l'une des positions de la circonférence de l'anneau en gouttière, où la profondeur radiale minimale (Pmin) est atteinte, est disposée en regard de la surface de contact (16) du dispositif de roulement (14).

19. Roue (10) selon la revendication **17** ou **18**, **caractérisée en ce que** le dispositif de roulement comporte une première (18) et une seconde bordures latérales s'étendant à partir de la surface de contact (16), une échancrure (70) étant formée dans l'une des première et seconde bordures latérales du dispositif de roulement.

20. Roue (10) selon la revendication **19**, **caractérisée en ce que** la roue comporte en outre un manchon de protection (72), agencé autour du tube (40, 140) de la chambre de pneu, et disposé en regard de l'échancrure.

21. Roue (10) selon la revendication **20**, **caractérisée en ce que** le tube de la chambre de pneu comporte une première (42, 142) et une seconde (44, 144) extrémités longitudinales et **en ce que** le manchon de protection (72) comporte une première extrémité (76) fermée, le manchon de protection étant disposé à la première extrémité longitudinale du tube, la première extrémité fermée étant disposée contre la seconde extrémité longitudinale.

## Patentansprüche

1. Ringförmige Reifenkammer (30, 130), welche die Form eines gerillten, biegsamen Schlauchs (40, 140) aufweist, der gebogen und in sich selbst geschlossen ist, wobei der Schlauch abwechselnd Ringe (46, 146) mit einer Ausbuchtung und Ringe (48, 148) mit einer Mulde umfasst, wobei der Schlauch einen Radius (R) aufweist, **dadurch gekennzeichnet, dass**, wenn sie in einer Ebene betrachtet wird, die zu der Achse (A) des Schlauchs senkrecht verläuft, die radiale Dicke (54, 154') der Ringe (46, 146) mit einer Ausbuchtung kleiner ist als die radiale Dicke (56, 156') der Ringe (48, 148) mit einer Mulde.

2. Reifenkammer (130) nach Anspruch 1, **dadurch gekennzeichnet, dass** der Schlauch (140) einen Radius (R) aufweist, und dadurch, dass jeder Ring (148) mit einer Mulde eine Ringnut (160) definiert, die eine radiale Tiefe (164, 164') aufweist, wobei die radiale Tiefe der Ringe mit einer Mulde über den Umfang des Schlauchs variiert.

3. Reifenkammer (130) nach Anspruch 2, **dadurch gekennzeichnet, dass**, wenn sie in einer Ebene betrachtet werden, die zu der Achse (A) des Schlauchs (140) quer verläuft, die Ringe mit einer Mulde eine ovale Form aufweisen.

4. Reifenkammer (130) nach Anspruch 2 oder 3, **dadurch gekennzeichnet, dass** die radiale Tiefe (164, 164') von mindestens einem der Ringe mit einer Mulde zwischen einer maximalen radialen Tiefe (Pmax) und einer minimalen radialen Tiefe (Pmin) variiert, wobei mindestens eine der maximalen und minimalen radialen Tiefe in mindestens zwei unterschiedlichen Positionen des Umfangs des Schlauchs erreicht wird.

5. Reifenkammer (130) nach Anspruch 4, **dadurch gekennzeichnet, dass** sich die zwei unterschiedlichen Positionen des Rings mit einer Mulde, in denen die minimale radiale Tiefe (Pmin) erreicht wird, diametral gegenüberliegen.

6. Reifenkammer (130) nach Anspruch 4 oder 5, **dadurch gekennzeichnet, dass** sich die zwei unterschiedlichen Positionen des Rings mit einer Mulde, in denen die maximale radiale Tiefe (Pmax) erreicht wird, nicht diametral gegenüberliegen.

7. Reifenkammer (130) nach einem der Ansprüche 1 bis 6, **dadurch gekennzeichnet, dass** die radiale Dicke (154, 154') von mindestens einem der Ringe (146) mit einer Ausbuchtung über den Umfang des Schlauchs variiert.

8. Reifenkammer (130) nach einem der Ansprüche 4 bis 6, **dadurch gekennzeichnet, dass** die radiale Dicke (154, 154') des Rings mit einer Ausbuchtung zwischen einer maximalen radialen Dicke (Emax) und einer minimalen radialen Dicke (Emin) variiert, wobei die maximale radiale Dicke (Emax) in mindestens einer der Positionen des Umfangs des Schlauchs erreicht wird, in der die minimale radiale Tiefe (Pmin) des Rings mit einer Mulde erreicht wird.

9. Reifenkammer (130) nach Anspruch 8, **dadurch gekennzeichnet, dass** die minimale radiale Dicke (Emin) des Rings mit einer Ausbuchtung in mindestens einer der Positionen des Umfangs des Schlauchs erreicht wird, in der die maximale radiale Tiefe (Pmax) des Rings mit einer Mulde erreicht wird.

10. Reifenkammer (130) nach einem der Ansprüche 1 bis 9, **dadurch gekennzeichnet, dass** der Schlauch einen Radius (R) aufweist, und dadurch, dass, wenn sie in einer Ebene betrachtet wird, die zu der Achse (A) des Schlauchs senkrecht verläuft, die radiale Dicke (156, 156') von mindestens einem der Ringe (148) mit einer Mulde über den Umfang des Schlauchs variiert.

11. Reifenkammer (30, 130) nach einem der Ansprüche 1 bis 10, **dadurch gekennzeichnet, dass**, wenn sie in einer Ebene betrachtet wird, welche die Achse des Schlauchs enthält, die Peripherie (62, 162) von mindestens einem der Ringe mit einer Ausbuchtung im Wesentlichen flach ist.

12. Reifenkammer (130) nach einem der Ansprüche 1 bis 11, **dadurch gekennzeichnet, dass**, wenn sie in einer Ebene betrachtet wird, welche die Achse des Schlauchs enthält, der Querschnitt von mindestens einem der Ringe mit einer Mulde gewölbt ist.

13. Reifenkammer (30, 130) nach einem der Ansprüche 2 bis 12, **dadurch gekennzeichnet, dass**, wenn sie in einer Ebene betrachtet wird, welche die Achse des Schlauchs enthält, die axiale Länge (50, 150, 150') der Peripherie von mindestens einem der Ringe mit einer Ausbuchtung strikt größer ist als die axiale Länge (52, 152, 152') der Nut von mindestens einem der Ringe mit einer Mulde.

14. Reifenkammer (30, 130) nach einem der Ansprüche 1 bis 13, **dadurch gekennzeichnet, dass** der Schlauch (40, 140) aus einem thermoplastischen Elastomer (TPE) gebildet ist.

15. Reifenkammer (30, 130) nach einem der Ansprüche 1 bis 14, **dadurch gekennzeichnet, dass** es sich um eine nicht aufblasbare Kammer handelt.

16. Reifenkammer (30, 130) nach einem der Ansprüche 1 bis 15, **dadurch gekennzeichnet, dass** sie aus einem gerillten, biegsamen Schlauch (40, 140) gebildet ist, der gebogen und in sich selbst geschlossen ist.

17. Rad (10), das dazu ausgestaltet ist, an einem Fahrzeug (200), wie etwa einem Fahrrad, montiert zu werden, **dadurch gekennzeichnet, dass** es umfasst:
- eine Rollvorrichtung (14), die eine Kontaktfläche (16) umfasst, die dazu ausgestaltet ist, bei einer Bewegung des Fahrzeugs mit dem Boden in Kontakt zu kommen, und eine innere Aufnahme (20) definiert,
- eine Reifenkammer (30, 130) nach einem der Ansprüche 1 bis 16, wobei die Reifenkammer in der inneren Aufnahme der Rollvorrichtung angeordnet ist.

18. Rad (10) nach Anspruch 17, das eine Reifenkammer (130) nach Anspruch 4 umfasst, **dadurch gekennzeichnet, dass** eine der Positionen des Umfangs des Rings mit einer Mulde, in der die minimale radiale Tiefe (Pmin) erreicht wird, gegenüber der Kontaktfläche (16) der Rollvorrichtung (14) angeordnet ist.

19. Rad (10) nach Anspruch 17 oder 18, **dadurch gekennzeichnet, dass** die Rollvorrichtung einen ersten (18) und einen zweiten seitlichen Rand umfasst, die sich von der Kontaktfläche (16) ausgehend erstrecken, wobei eine Aussparung (70) in einem des ersten und zweiten seitlichen Rands der Rollvorrichtung gebildet ist.

20. Rad (10) nach Anspruch 19, **dadurch gekennzeichnet, dass** das Rad ferner eine Schutzhülle (72) umfasst, die um den Schlauch (40, 140) der Reifenkammer zusammengefügt ist, und gegenüber der Aussparung angeordnet ist.

21. Rad (10) nach Anspruch 20, **dadurch gekennzeichnet, dass** der Schlauch der Reifenkammer ein erstes (42, 142) und ein zweites Längsende (44, 144) umfasst, und dadurch, dass die Schutzhülle (72) ein erstes geschlossenes Ende (76) umfasst, wobei die Schutzhülle an dem ersten Längsende des Schlauchs angeordnet ist und das erste geschlossene Ende an dem zweiten Längsende angeordnet ist.

## Claims

1. A toroidal inner tube (30, 130) in the form of a flexible corrugated tube (40, 140) that is curved to form a closed loop, the tube comprising alternating crest rings (46, 146) and trough rings (48, 148), the tube presenting a radius (R), **characterized in that**, when measured in a plane perpendicular to the axis (A) of the tube, the radial thickness (54, 154') of the crest rings (46, 146) is less than the radial thickness (56, 156') of the trough rings (48, 148).

2. An inner tube (130) according to claim 1, **characterized in that** the tube (140) presents a radius (R), and **in that** each trough ring (148) defines an annular groove (160) that presents a radial depth (164, 164'), the radial depth of the trough rings varying around the circumference of the tube.

3. An inner tube (130) according to claim 2, **characterized in that**, when measured in a plane extending transversely relative to the axis (A) of the tube (140), the trough rings present a shape that is oval.

4. An inner tube (130) according to claim 2 or claim 3, **characterized in that** the radial depth (164, 164') of at least one of the trough rings varies between a maximum radial depth (Pmax) and a minimum radial depth (Pmin), at least one of the maximum and minimum radial depths being reached at at least two distinct positions around the circumference of the tube.

5. An inner tube (130) according to claim 4, **characterized in that** the two distinct positions of the trough ring, where the minimum radial depth (Pmin) is reached, are diametrically opposite.

6. An inner tube (130) according to claim 4 or claim 5, **characterized in that** the two distinct positions of the trough ring, where the maximum radial depth (Pmax) is reached, are not diametrically opposite.

7. An inner tube (130) according to any one of claims 1 to 6, **characterized in that** the radial thickness (154, 154') of at least one of the crest rings (146) varies around the circumference of the tube.

8. An inner tube (130) according to any one of claims 4 to 6, **characterized in that** the radial thickness (154, 154') of the crest ring varies between a maximum radial thickness (Emax) and a minimum radial thickness (Emin), the maximum radial thickness (Emax) being reached at at least one of the circumferential positions of the tube where the minimum radial depth (Pmin) of the trough ring is reached.

9. An inner tube (130) according to claim 8, **characterized in that** the minimum radial thickness (Emin) of the crest ring is reached at at least one of the circumferential positions of the tube where the maximum radial depth (Pmax) of the trough ring is reached.

10. An inner tube (130) according to any one of claims 1 to 9, **characterized in that** the tube presents a radius (R), and **in that**, when measured in a plane perpendicular to the axis (A) of the tube, the radial thickness (156, 156') of at least one of the trough rings (148) varies around the circumference of the tube.

11. An inner tube (30, 130) according to any one of claims 1 to 10, **characterized in that**, when measured in a plane containing the axis of the tube, the periphery (62, 162) of at least one of the crest rings is substantially flat.

12. An inner tube (130) according to any one of claims 1 to 11, **characterized in that** when measured in a plane containing the axis of the tube, the section of at least one of the trough rings is rounded.

13. An inner tube (30, 130) according to any one of claims 2 to 12, **characterized in that**, when measured in a plane containing the axis of the tube, the axial length (50, 150, 150') of the periphery of at least one of the crest rings is strictly greater than the axial length (52, 152, 152') of the groove of at least one of the trough rings.

14. An inner tube (30, 130) according to any one of claims 1 to 13, **characterized in that** the tube (40, 140) is made of thermoplastic elastomer (TPE).

15. An inner tube (30, 130) according to any one of claims 1 to 14, **characterized in that** it is a non-inflatable inner tube.

16. An inner tube (30, 130) according to any one of claims 1 to 15, **characterized in that** it is made from a flexible corrugated tube (40, 140) that is curved into a closed loop.

17. A wheel (10) configured to be mounted on a vehicle (200), such as a bicycle, the wheel being **characterized in that** it comprises:
a running device (14) comprising a contact surface (16) configured to come into contact with the ground during travel of the vehicle, and defining an internal housing (20); and
an inner tube (30, 130) according to any one of claims 1 to 16, the inner tube being arranged in the internal housing of the running device.

18. A wheel (10) according to claim 17, including an inner tube (130) according to claim 4, **characterized in that** one of the circumferential positions of the trough ring where the minimum radial depth (Pmin) is reached is arranged facing the contact surface (16) of the running device (14).

19. A wheel (10) according to claim 17 or claim 18, **characterized in that** the running device includes a first lateral margin (18) and a second lateral margin extending from the contact surface (16), an inspection port (70) being formed in either one of the first and second lateral margins of the running device.

20. A wheel (10) according to claim 19, **characterized in that** the wheel also includes a protective sleeve (72) arranged around the tube (40, 140) of the inner tube and arranged facing the inspection port.

21. A wheel (10) according to claim 20, **characterized in that** the tube forming the inner tube has first and second longitudinal ends (42, 44; 142, 144) and **in that** the protective sleeve (72) has a closed first end (76), the protective sleeve being arranged at the first longitudinal end of the tube, the closed first end being arranged against the second longitudinal end.
